**Europäisches Patentamt**

**European Patent Office**

**Office européen des brevets**

(19)

(11) Numéro de publication : **0 320 338 B1**

(12) **FASCICULE DE BREVET EUROPEEN**

(45) Date de publication du fascicule du brevet :
**12.08.92 Bulletin 92/33**

(51) Int. Cl.⁵ : **C09K 3/14, C03C 1/00**

(21) Numéro de dépôt : **88403014.9**

(22) Date de dépôt : **30.11.88**

(54) **Composition de polissage perfectionnée à base de cérium et son procédé de préparation.**

(30) Priorité : **09.12.87 FR 8717129**

(43) Date de publication de la demande :
**14.06.89 Bulletin 89/24**

(45) Mention de la délivrance du brevet :
**12.08.92 Bulletin 92/33**

(84) Etats contractants désignés :
**AT BE CH DE ES FR GB GR IT LI LU NL SE**

(56) Documents cités :
**EP-A- 0 031 749**
**EP-A- 0 126 675**
**EP-A- 0 133 102**
**EP-A- 0 266 233**
**US-A- 3 097 083**
**SOVIET INVENTIONS ILLUSTRATED, section CH, semaine E21, no. G04 43520 E/21, Derwent Publications Ltd., Londres, GB; &SU-A-852 926 (KHODAKOV G S) 07-08-1981 IDEM.**

(73) Titulaire : **RHONE-POULENC CHIMIE**
**25, quai Paul Doumer**
**F-92408 Courbevoie Cédex (FR)**

(72) Inventeur : **Le Loarer, Jean-Luc**
**24, Rue du Général Guillaumat**
**F-17000 - La Rochelle (FR)**
Inventeur : **Tastu, Francis**
**Lotissement Les Tamaris Cour des Alouettes No. 1**
**Lauzières F-17137 - Nieul/sur/Mer (FR)**

(74) Mandataire : **Dutruc-Rosset, Marie-Claude et al**
**RHONE-POULENC INTERSERVICES Service Brevets Chimie 25, Quai Paul Doumer**
**F-92408 Courbevoie Cédex (FR)**

## Description

La présente invention se rapporte à une composition de polissage perfectionnée à base de cérium, son procédé de préparation et ses applications au polissage du verre, des matières céramiques et autres matériaux de type vitreux.

Plus précisément, l'invention vise à fournir une composition de polissage ayant des propriétés améliorées en ce qui concerne sa tenue en suspension et son aptitude à être redispersée après sédimentation.

Parmi les compositions de polissage utilisées actuellement pour le polissage du verre minéral, celles à base de terres rares et en particulier, de cérium, s'avèrent généralement les plus performantes.

Ainsi, on connait des compositions à base d'oxyde cérique entouré d'une gangue minérale constituée par des anions notamment fluorures et phosphates (FR-A 2 472 601), ou combiné soit à un oxyde d'une autre terre rare (FR-A 2 545 830), soit à une phase constituée par un pyrosilicate de terres rares (FR-A 2 549 846).

Les compositions de polissage décrites répondent d'une manière satisfaisante aux nombreuses exigences auxquelles doivent répondre lesdites compositions et qui sont :
– être efficace, c'est-à-dire permettre le polissage d'une face de verre généralement doucie, le plus rapidement possible,
– être propre, c'est-à-dire ne pas rayer le verre pendant le travail de polissage,
– ne pas provoquer de réaction défavorable en surface, c'est-à-dire ne pas être chimiquement trop active vis-à-vis du verre : problème de brûlage, peau d'orange, cloques ...,
– avoir une durée de vie ou longévité très grande, pour être utilisée le plus longtemps possible sans inconvénient,
– avoir une bonne tenue en suspension, permettant une répartition homogène de la poudre dans le bain, et évitant les dépôts : cette dispersion doit être effective dès la mise en suspension et pendant tout le temps de travail,
– ne pas mousser, les mousses provoquent des débordements, bouchent les tuyauteries, diminuent le rendement et gênent le personnel,
– être facile à remettre en suspension après arrêt prolongé et décantation, même si le bain est chargé en éléments du verre poli : phénomène de "caking",
– ne pas être toxique : afin d'éviter tous les problèmes de peaux ou autres maladies,
– être un produit régulier, de couleur agréable, facile à employer,
– ne pas coller au verre après polissage, donc permettre un nettoyage rapide,
– être facile à floculer, pour élimination des rejets usine.

Toutefois, les compositions de polissage intervenant généralement dans un système de polissage à l'arrosé, une bonne tenue en suspension dans l'eau est requise et une amélioration de cette propriété est toujours souhaitée car l'agent de polissage, de par sa nature, finit toujours par décanter et il est habituel de distinguer le compactage du caking.

Le compactage "initial" s'étend pour du produit frais. En effet, les utilisateurs préparent souvent leur suspension à l'avance, à la concentration désirée, et la stockent en attendant sa mise en service sur les machines. Un laps de temps, pouvant atteindre plusieurs jours, s'écoule entre la préparation de la suspension et son utilisation, temps pendant lequel il y a décantation. Se produisent alors deux cas de figures :
– ou le décantat forme une couche expansée, impalpable ;
– ou bien la partie qui repose au fond du réservoir revêt un aspect boueux, collant, voire même celui d'un véritable béton.

La remise en suspension du produit est instantanée et complète dans le premier cas, et la concentration programmée est retrouvée.

S'il y a, par contre, compactage du produit comme dans le deuxième cas, une partie seulement du produit se remet en suspension, entraînant un appauvrissement du bain en composition de polissage. Dans des cas extrêmes, le compactage atteint des proportions telles qu'il est impossible de décoller le produit du fond du réservoir. Il s'ensuit une perte importante de produit neuf devenu inutilisable.

En revanche, le caking apparaît dans les machines, en cours ou après que le produit ait travaillée.

Dans le cas d'un polissage sous conditions dures (grande vitesse, fortes pressions), l'agent de polissage subit une usure mécanique notable : cassage des agglomérats, glissement de la granulométrie vers les fines particules. La suspension s'enrichit d'autre part en particules exogènes (silicates provenant du verre enlevé). La conjugaison de ces deux facteurs fait que, lorsqu'en fin de journée ou en fin de semaine, comme c'est souvent le cas, les machines sont arrêtées, le produit décante dans les réservoirs et tuyauteries sous forme d'une boue consistante et collante. Il y a formation de caking. La remise en suspension au redémarrage est alors malaisée, ou, dans le pire des cas, impossible.

En raison des nombreux inconvénients qui résultent lorsque le caking et le compactage sont notables, on a cherché à améliorer les propriétés de suspensivité d'une composition polissante contenant de l'oxyde de cérium en proposant selon FR-A 1 263 505 de le combiner à un hydroxyde cérique gélatineux formé par réaction d'un sel soluble de cérium avec une base, un sel hydrolysable ou un sel générateur d'anions en solution combinables avec les ions de cérium en solution pour former une matière gélatineuse. A cet effet, sont cités entre autres bases, les hydroxydes de sodium, de potassium, d'ammonium, le métaborate de sodium anhydre ou hydraté.

Toutefois, ladite composition, de par la présence d'une matière gélatineuse, risque d'entraîner le glaçage du polissoir et provoquer une chute de l'efficacité polissante.

Un des objectifs de la présente invention est de proposer une composition de polissage perfectionnée à base d'oxyde cérique, contenant certains additifs afin d'améliorer les caractéristiques de compactage et de caking de celle-ci.

Un autre objectif de l'invention est que la présence desdits additifs n'intervienne pas sur l'efficacité polissante et n'entraîne pas sa diminution.

Enfin, un dernier objectif de l'invention est que la présence desdits additifs n'ait pas une action néfaste sur l'état de surface du verre et conduise à un verre propre.

La composition de polissage, objet de la présente invention, qui permet de remplir les objectifs visés est caractérisée par le fait qu'elle comprend en mélange physique d'une part un agent de polissage à base d'oxyde cérique et d'autre part à titre d'additif, un composé du bore, la dite composition ne formant aucune matière gelatineuse.

La demanderesse à trouvé d'une manière inattendue que la présence d'un composé de bore mis en oeuvre en quantité suffisante dans la suspension de l'agent de polissage du verre, permettait de diminuer le caking et le compactage.

Conformément à la présente invention, l'agent de polissage peut être l'oxyde cérique mis en oeuvre seul ou sous forme d'une composition à base d'oxyde cérique.

Dans l'exposé qui suit de la présente invention, on désigne par oxyde cérique aussi bien l'oxyde cérique seul ou sous forme de composition.

L'oxyde cérique mis en oeuvre selon l'invention peut être tout oxyde cérique présentant les caractéristiques physico-chimiques données ci-après.

L'oxyde cérique se trouve sous forme pulvérulente dont les dimensions des particules sont inférieures à environ 20 μm. D'une manière préférentielle, on fait appel à un oxyde cérique ayant des dimensions variant entre 0,1 μm et 10 μm : l'analyse granulométrique étant effectuée à l'aide de l'instrument SEDIGRAPH 5000 D qui mesure le taux de sédimentation des particules en suspension et présente automatiquement les résultats en une distribution en pourcentages cumulatifs en fonction des diamètres équivalents sphériques (basée sur la loi de Stokes).

Pour ce qui est de la surface spécifique de l'oxyde cérique, elle varie entre 1 et 35 m²/g et l'on choisit, de préférence, un oxyde cérique ayant une surface spécifique comprise entre 3 et 10 m²/g : ladite surface est déterminée selon la méthode BRUNAUER - EMMET - TELLER décrite dans "The Journal of American Society 60, p. 309 (1938)".

La pureté de l'oxyde cérique employé est indifférente. C'est ainsi que l'on peut faire appel à un oxyde cérique très pur notamment celui disponible dans le commerce sous la dénomination de Opaline qui est de l'oxyde cérique vendu par la Société Rhône-Poulenc avec une pureté supérieure à 99 %.

On peut également mettre en oeuvre de l'oxyde cérique associé à un ou plusieurs autres oxydes de terres rares et/ou à un ou plusieurs sels.

D'une manière préférentielle, on fait appel à une composition de polissage comprenant au moins environ 30 % en poids d'oxyde cérique.

On peut utiliser l'oxyde cérique sous la forme des compositions décrites dans FR-A-2 472 601.

Les compositions décrites dans FR-A-2 472 601 sont obtenues selon un procédé qui consiste à mélanger simultanément, en continu, une solution de sel de cérium, une solution basique et une solution d'au moins un acide et/ou un sel dont le ou les anions sont susceptibles de former des composés insolubles de terres rares, le nombre d'équivalents basiques mis en oeuvre étant supérieur ou égal au nombre d'équivalents cérium et le pH du milieu réactionnel étant supérieur à 6 ; à filtrer le précipité obtenu ; à le sécher ; à le calciner.

Dans la première étape, on réalise le mélange des réactifs.

La solution de sel de cérium mise en oeuvre peut être toute solution aqueuse de sel de cérium à l'état céreux et/ou cérique soluble dans les conditions de l'invention et, notamment, une solution de chlorure céreux ou de nitrate de cérium à l'état céreux ou cérique, ou du mélange des deux.

La concentration de la solution de sel de cérium n'est pas un facteur critique et elle peut varier dans de larges limites ; une concentration comprise entre 0,5 et 2 moles par litre est préférée.

On introduit préférentiellement le cérium dans le milieu réactionnel à l'état céreux et on l'oxyde à l'état cérique en ajoutant en continu au mélange réactionnel soit isolément, soit en mélange avec une solution autre que celle contenant la base, un agent oxydant compatible avec ce milieu. Parmi les agents oxydants pouvant convenir, on peut citer notamment des solutions de perchlorate, de chlorate, d'hypochlorite, de persulfate de sodium, de potassium ou d'ammonium, d'eau oxygénée ou l'air, l'oxygène, l'ozone. On peut également oxyder le cérium par voie électrochimique. On utilise de préférence l'eau oxygénée.

La proportion d'oxydant par rapport au sel céreux à oxyder peut varier dans de larges limites. Elle est en général supérieure à la stoechiométrie et correspond, de préférence, à un excès compris entre 10 et 40 %.

La solution basique mise en oeuvre peut être notamment une solution aqueuse d'ammoniaque, d'hydroxyde de sodium ou de potasse et l'on met en oeuvre de préférence une solution d'ammoniaque.

La normalité de la solution basique mise en oeuvre n'est pas un facteur critique et peut varier dans de larges limites, elle sera toutefois avantageusement comprise entre 1 et 5 N.

La proportion entre la solution basique et la solution de sel de cérium doit être telle que le nombre d'équivalents basiques introduits soit supérieur ou égal au nombre d'équivalents cérium introduits dans le même temps. Il peut être avantageux de mettre en oeuvre un excès supérieur à 5 % d'équivalents basiques par rapport aux équivalents cérium. Le pH du milieu réactionnel qui doit être alors supérieur à 6, ne doit toutefois pas dépasser environ 10. Il est avantageusement compris entre 7 et 9. Il peut être particulièrement avantageux de régler le pH dans ces limites à une valeur constante à ± 0,1 unité de pH.

La solution d'au moins un acide et/ou un sel dont le ou les anions sont susceptibles de former de composés insolubles de terres rares selon l'invention peut être notamment toute solution aqueuse d'acide et/ou de sel dont l'anion est choisi parmi le groupe constitué par au moins un des anions suivants : oxalate, fluorure, carbonate, borate, silicate, sulfate, phosphate. Le ou les sels mis en oeuvre sont ceux solubles dans l'eau et, de préférence, les sels d'ammonium, de sodium, de potassium. Cette solution est introduite dans le milieu réactionnel isolément ou en mélange avec la solution basique. On utilise de préférence des sels, en particulier, ceux dont l'anion est un fluorure, un sulfate, un borate ou un phosphate.

La concentration de la solution d'acide et/ou de sel n'est pas un facteur critique et peut varier dans de larges limites ; elle est toutefois de préférence inférieure à 6 moles par litre, et, plus particulièrement, comprise entre 2 et 4 moles par litre.

Selon le procédé décrit dans FR-A-2 472 601, on peut en outre ajouter en continu au mélange réactionnel soit isolément, soit en mélange avec la solution de sel de cérium, une solution aqueuse de sel d'au moins une terre rare trivalente contenant éventuellement l'yttrium et soluble dans les conditions de l'invention. Parmi les sels convenant bien, on citera notamment les chlorures ou les nitrates de lanthane, praséodyme, néodyme, samarium, europium, gadolinium, terbium, dysprosium, holmium, erbium, thulium, ytterbium, lutécium, d'yttrium. En particulier, on peut mettre en oeuvre une solution contenant le sel de cérium et des sels de terres rares et qui proviendrait directement ou indirectement du traitement des minerais de terres rares.

La concentration de la solution de sel(s) de terre(s) rare(s) mise en oeuvre n'est pas un facteur critique et elle peut varier dans de larges limites ; elle est toutefois, de préférence, comprise entre 0,2 et 1 mole par litre.

On effectue le mélange des différents réactifs précités. Il est à noter que le nombre d'équivalents anioniques mis en oeuvre est supérieur ou égal au nombre d'équivalents cationiques mis en oeuvre.

La température du milieu réactionnel doit être comprise, de préférence, entre environ 20 et 95°C et, plus particulièrement, entre 50 et 70°C.

Le temps de séjour du mélange dans le milieu réactionnel n'est pas un facteur critique et peut varier dans de larges limites ; généralement on mettra en oeuvre des temps de séjour compris entre environ 30 minutes et 2 heures.

La masse réactionnelle peut être mûrie pendant un certain temps à une température comprise entre environ 20 et 95°C et, de préférence entre 50 et 80°C avant l'opération de filtration. Dans ce cas, le temps de mûrissement n'est pas un facteur critique selon l'invention et peut varier dans de larges limites ; toutefois, un temps pouvant aller jusqu'à 2 heures est généralement satisfaisant.

La deuxième étape du procédé d'obtention de la composition décrite dans FR-A-2 472 601, consiste à filtrer après réaction la masse réactionnelle qui se présente sous la forme d'une suspension.

Le gâteau de filtration peut être ensuite lavé avec de l'eau ou une solution d'un sel d'ammonium.

Le produit obtenu après filtration et éventuellement lavage est ensuite séché éventuellement en continu. La température de séchage est comprise de préférence entre 100 et 600°C, le temps de séchage n'est pas critique et peut varier dans ces conditions, entre 30 minutes et 24 heures.

Le produit sec est ensuite calciné éventuellement en continu à une température comprise entre 600°C et 1200°C pendant une durée généralement comprise entre environ 30 minutes et 2 heures.

Les compositions obtenues selon le procédé décrit ci-dessus peuvent être soumises à des opérations de broyage et de sélection granulométrique, de telle sorte que l'on obtienne la répartition granulométrique définie ci-dessus. Celles-ci sont conduites selon les techniques bien connues de l'homme de métier et réalisées dans un appareillage classique tel que, par exemple, un broyeur à marteaux ou à broches pour le broyage, un sélecteur à turbine à jet d'air ou un hydrocyclone pour la selection granulométrique.

Conformément à la présente invention, on met en oeuvre préférentiellement les compositions à base d'oxyde cérique obtenues selon le procédé décrit ci-dessus mais en faisant appel aux anions cités préférentiellement tels que fluorure, sulfate, borate ou phosphate.

Convient également à la présente invention l'oxyde cérique sous la forme des compositions décrites dans FR-A-2 549 846 comprennent une phase cristallographique du type $CeO_2$ et une phase cristallographique constituée par un pyrosilicate de terres rares répondant à la formule $Ln_{2-x}Ce_xSi_2O_7$ dans laquelle Ln représente au moins un élément pris dans le groupe constitué par les lanthanides et l'yttrium et dans laquelle x est supérieur ou égal à 0 et inférieur à 2.

Les compositions décrites dans FR-A-2 549 846 répondent à l'analyse chimique suivante :
– de 75 à 95 % en poids de terres rares exprimées en oxydes avec un pourcentage d'oxyde cérique par rapport au poids total des oxydes de terres rares variant de 60 à 85 %
– de 5 à 25 % en poids de silicium exprimé en $SiO_2$.

Elles renferment essentiellement deux phases cristallographiques : une phase de type $CeO_2$ à structures cubique et une phase pyrosilicate de terres rares $Ln_{2-x}Ce_xSi_2O_7$ de structure orthorhombique : x est supérieur ou égal à 0 et inférieur à 2, et de préférence, x est supérieur ou égal à 0 et inférieur ou égal à 0,2. Elles contiennent également en quantités moindres, un phase d'oxydes de terres rares généralement un sesquioxyde $Ln_2O_3$ de structure cubique type fluorine et une phase de dioxyde de silicium $SiO_2$ sous forme vitreuse ou cristallisée.

Les proportions des différentes phases varient en fonction de la quantité des matières premières mises en oeuvre et des conditions de calcination.

Généralement, elles sont les suivantes :

| | |
|---|---|
| - $CeO_2$ | : 30 à 80 % |
| - $Ln_{2-x}Ce_xSi_2O_7$ | : 12 à 60 % |
| - $Ln_2O_3$ | : 0 à 15 % |
| - $SiO_2$ | : 1,5 à 8 % |

Les compositions décrites dans FR-A-2 549 846 sont obtenues selon un procédé qui consiste à mélanger simultanément, une solution de sel de cérium, une solution basique, une solution aqueuse de sel d'au moins une terre rare trivalente ou d'yttrium et une solution d'au moins un dérivé oxygéné du silicium susceptible de former des composés insolubles de terres rares ; à filtrer le précipité obtenu ; à le sécher et à le calciner à une température supérieure à 850°C.

Dans la première étape du procédé, on réalise le mélange des différents réactifs.

La solution de sel de cérium, la solution basique et la solution aqueuse de sel de terre rare trivalente sont caractérisées ci-dessus.

La proportion entre la solution basique et la solution de sel de cérium doit être telle que le nombre d'équivalents de la solution basique introduits soit supérieur ou égal au nombre d'équivalents cérium introduits dans le même temps. Il peut être avantageux de mettre en oeuvre un excès supérieur à 5 % d'équivalents basiques par rapport aux équivalents cérium. Le pH du milieu réactionnel peut varier entre 5 et 10. Il est avantageusement compris entre 7 et 9. Il peut être particulièrement avantageux de régler le pH dans ces limites à une valeur constante à ± 0,1 unité de pH.

La proportion entre la solution d'un sel de cérium et la solution aqueuse d'un ou des sels de terres rares trivalentes est telle que le rapport entre le dioxyde de cérium et les oxydes de terres rares ($CeO_2 + Ln_2O_3$) varie entre 60 et 85 % en poids.

La solution d'au moins un dérivé oxygéné du silicium peut être toute solution aqueuse de dérivé oxygéné du silicium susceptible de former des composés insolubles de terres rares. Le ou les dérivés du silicium doivent être solubles dans l'eau. On peut faire appel aux composés suivants : dioxyde de silicium, acide silicique et silicates de métaux alcalins. Plus précisément, on citera la silice amorphe, l'acide métasilicique, l'acide métadisilicique, l'orthosilicate de sodium, le silicate de sodium de formule $Na_2O, xSiO_2$ dans laquelle x varie de 3 à 5, le métasilicate de sodium, le métadisilicate de sodium, le métasilicate de potassium, le métadisilicate de potassium, le tétrasilicate de potassium. On peut employer indifféremment ces sels sous forme anhydre ou hydratée.

On utilise de préférence le silicate de sodium $Na_2O, 4SiO_2$.

La concentration de la solution d'un ou des dérivés oxygénés du silicium n'est pas un facteur critique selon l'invention et elle peut varier dans de larges limites ; lorsqu'elle est exprimée en moles/litre de $SiO_2$, elle est comprise entre 0,1 et 2,0.

La proportion entre la solution d'un ou des dérivés oxygénés du silicium et la solution aqueuse d'un ou des sels de terres rares trivalentes est définie de façon à avoir un rapport entre les équivalents silicate ($SiO_3^=$) et les équivalents terre(s) rare(s) trivalente(s) qui se situe entre 0,1 et 1, de préférence, entre 0,2 et 0,6.

On peut réaliser le mélange des différentes solutions des réactifs précités selon de nombreuses variantes. Par exemple, on peut faire le mélange sous agitation en ajoutant en continu et par voie séparée la solution de sel de cérium, éventuellement la solution de l'agent oxydant, la solution de sel(s) de terre(s) rare(s), la solution de dérivé(s) oxygéné(s) du silicium et la solution basique. On peut également effectuer le prémélange de la solution de sel de cérium et de la solution de sel(s) de terre(s) rare(s) qui est ajouté en continu au milieu réactionnel en parallèle avec les deux autres solutions. On peut aussi faire le prémélange de la solution de dérivé(s) oxygéné(s) de silicium avec la solution basique. Dans le cas de l'emploi d'un agent oxydant, il est possible de le mettre en oeuvre en mélange avec une solution autre que celle de la base, en particulier, en mélange avec la solution de sel de cérium et/ou de la solution de sel(s) de terre(s) rare(s).

Les opérations de mélange, de filtration, de séchage se font dans les conditions décrites ci-dessus.

Le produit sec est ensuite calciné éventuellement en continu à température d'au moins 850°C mais située de préférence entre 850 et 1050°C. La borne supérieure définissant la gamme de température n'est pas critique et peut atteindre des valeurs aussi élevées que 1500°C.

On réalise ensuite le broyage du produit calciné de telle sorte qu'il présente des dimensions d'agrégats allant de 0,2 à 5,0 μm. Généralement la taille des agrégats exprimée par le diamètre moyen varie de 0,5 à 1,5 μm. On définit le diamètre moyen comme étant un diamètre tel que 50 % en poids des agrégats ont un diamètre supérieur ou inférieur au diamètre moyen.

Le broyage peut être accompagné d'une opération de sélection granulométrique qui peut être réalisée simultanément ou successivement suivant les techniques décrites précédemment.

Les compositions d'oxyde cérique décrites dans FR-A-2 545 830 qui contiennent de l'oxyde cérique associé à au moins un oxyde non coloré d'une autre terre rare trivalente sont également bien adaptées à la mise en oeuvre de la présente invention.

Comme oxydes de terres rares non colorées , on peut citer l'oxyde de lanthane, samarium, europium, gadolinium, dysprosium, thulium, ytterbium, lutécium et d'yttrium. Ces oxydes sont, généralement sous forme sesquioxyde.

On peut également mettre en oeuvre un mélange de ces oxydes.

D'une manière préférentielle, on utilise le sesquioxyde de lanthane.

Les proportions d'oxyde cérique et d'oxydes de terres rares dans la composition de polissage décrite dans FR-A-2 545 830 peuvent varier dans les limites suivants :
– de 40 à 99,5 % en poids d'oxyde cérique
– de 0,5 à 60 % en poids d'oxydes de terres rares.

D'une manière préférée, on choisira une composition contenant :
– de 85 à 98 % en poids d'oxyde cérique
– de 2 à 15 % en poids d'oxydes de terres rares.

Les compositions décrites dans FR-A-2 545 830 sont préparées selon un procédé qui consiste à mélanger simultanément, en continu, une solution de sel de cérium, une solution basique et une solution d'au moins un sel d'une terre rare trivalente choisie dans le groupe constitué par les lanthanides et l'yttrium et dont l'oxyde n'est pas coloré : le nombre d'équivalents basiques mis en oeuvre étant supérieur ou égal au nombre d'équivalents cérium et terres rares et le pH du milieu réactionnel étant supérieur à 6 ; à filtrer le précipité obtenu ; à le sécher ; à le calciner.

Dans la première étape du procédé, on réalise le mélange des différents réactifs.

La solution de sel de cérium et la solution basique sont décrites ci-dessus.

Selon le procédé décrit dans FR-A-2 545 830, on ajoute en continu au mélange réactionnel soit isolément, soit en mélange avec la solution de sel de cérium, une solution aqueuse de sel d'au moins une terre rare trivalente choisie dans le groupe constitué par les lanthanides et l'yttrium et ayant pour caractéristique de former un oxyde non coloré. Le sel doit être soluble dans les conditions de l'invention. Parmi les sels convenant bien, on citera notamment les chlorures ou les nitrates de lanthane, samarium, europium, gadolinium, dysprosium, thulium, ytterbium, lutécium et d'yttrium.

La concentration de la solution de sel(s) de terre(s) rare(s) mise en oeuvre n'est pas un facteur critique et elle peut varier dans de larges limites ; elle est toutefois, de préférence, comprise entre 0,2 et 4 moles par litre.

La proportion entre la solution de sel de cérium et la solution de sel(s) de terre(s) rare(s) est déterminée par régulation des débits respectifs de telle sorte que l'on obtienne la composition souhaitée avec les pourcentages pondéraux de chaque constituant définis ci-dessus.

La proportion entre la solution basique et la solution de sel de cérium et de sel(s) de terre(s) rare(s) doit être telle que le nombre d'équivalents basiques introduits soit supérieur ou égal au nombre d'équivalents cérium et terre(s) rare(s) introduits dans le même temps. Il peut être avantageux de mettre en oeuvre un excès supérieur à 5 % d'équivalents basiques par rapport aux équivalents cérium et terre(s) rare(s). Le pH du milieu réactionnel qui doit être alors supérieur à 6, ne doit toutefois pas dépasser environ 10. Il est avantageusement compris entre 7 et 9. Il peut être particulièrement avantageux de régler le pH dans ces limites à une valeur constante à ± 0,1 unité de pH.

On peut réaliser le mélange des différentes solutions des réactifs précités selon de nombreuses variantes. Par exemple, on peut faire le mélange sous agitation en ajoutant en continu et par voie séparée la solution de sel de cérium, éventuellement la solution de l'agent oxydant, la solution de sel(s) de terre(s) rare(s) et la solution basique. On peut également effectuer le prémélange de la solution de sel de cérium et de la solution de sel(s) de terre(s) rare(s) qui est ajouté en continu au milieu réactionnel en parallèle avec la solution basique. Dans le cas de l'emploi d'un agent oxydant, il est possible de le mettre en oeuvre en mélange avec la solution de sel de cérium et/ou de la solution de sel(s) de terre(s) rare(s).

La température du milieu réactionnel n'est pas critique et peut être comprise, de préférence, entre 10 et 95°C et, plus particulièrement, entre 20 et 70°C.

Le temps de séjour du mélange dans le milieu réactionnel n'est pas un facteur critique et peut varier dans de larges limites ; généralement, on choisira des temps de séjour compris entre 30 minutes et 2 heures.

Selon une variante du procédé décrit dans FR-A-2 545 830, la masse réactionnelle peut être mûrie pendant un certain temps à une température comprise entre 10 et 95°C et, de préférence entre 20 et 80°C avant l'opération de filtration. Dans ce cas, le temps de mûrissement n'est pas un facteur critique et peut varier dans de larges limites ; toutefois, un temps pouvant aller de 30 minutes jusqu'à 2 heures est généralement satisfaisant. L'opération de mûrissement s'effectue sous agitation.

La deuxième étape du procédé d'obtention de la composition décrite dans FR-A-2 545 830, consiste à filtrer après réaction la masse réactionnelle qui se présente sous la forme d'une suspension.

Le gâteau de filtration peut être ensuite lavé avec de l'eau.

Le produit obtenu après filtration et éventuellement lavage est ensuite séché éventuellement en continu. La température de séchage est comprise de préférence entre 100 et 600°C, le temps de séchage variant dans ces conditions de préférence entre 30 minutes et 2 heures.

Le produit sec est ensuite calciné éventuellement en continu à une température comprise entre 600 et 1200°C, de préférence 950° à 1150°C, pendant un temps généralement compris entre 30 minutes et 10 heures.

On réalise le broyage du produit calciné et éventuellement une opération de sélection granulométrique comme dans FR-A-2 549 846.

Une autre variante du procédé décrit dans FR-A-2 545 830 consiste à réaliser le mélange effectué dans la première étape selon deux voies (1) et (2) qui sont en tout point semblable sauf en ce qui concerne la température réactionnelle : la voie (1) conduit à l'obtention d'un précipité à chaud alors que selon la voie (2), le précipité est obtenu à froid. On fait ensuite le mélange des précipités obtenus selon la voie (1) et la voie (2) soit avant filtration, soit après filtration.

Pour plus de détails sur cette variante d'exécution, on se référera à FR-A-2 545 830.

Conformément à la présente interviennent dans les compositions de polissage comme agent de polissage, un oxyde cérique seul ou sous forme de composition et un composé de bore.

A titre de composés de bore, on fait appel de préférence aux acides boriques tels que l'acide orthoborique (ou son précurseur $B_2O_3$), métaborique, pyro- ou tétraborique ou aux borates métalliques, notamment de métaux alcalins, alcalino-terreux ou d'ammonium sous forme anhydre ou hydratée, en particulier aux tiers borates, hémiborates, monoborates, diborates, triborates, tétraborates, pentaborates de métaux, de préférence alcalins ou d'ammonium.

On peut également faire appel à un sel double contenant du bore, notamment les fluoborates métalliques, par exemple, le fluoborate de potassium.

Comme exemples de composés du bore convenant bien à l'invention, on peut citer :
– le métaborate de sodium
– le métaborate tétrahydraté de sodium
– le tétraborate de sodium
– le tétraborate décahydraté de sodium ou borax
– le tétraborate pentahydraté de sodium
– le métaborate de potassium
– le pentaborate tétrahydraté de potassium
– le tétraborate octahydraté de potassium
– le pentaborate tétrahydraté d'ammonium
– le tétraborate tétrahydraté d'ammonium

D'une manière préférentielle, on utilise l'acide orthoborique (ou son précurseur $B_2O_3$) et le borax.

Pour ce qui est des proportions des constituants intervenant dans la composition de polissage de l'invention, la quantité de composé de bore dépend de la nature du composé de bore.

La quantité de composé de bore doit être suffisante pour obtenir l'effet anti-compactage et/ou l'effet an-

7

ti-caking recherché.

Elle est facilement déterminée par l'homme de métier en effectuant de simples opérations d'exécution qui sont un simple mélange de produits en quantités variables, puis la réalisation des tests correspondants décrits ci-après permettant d'apprécier si la quantité de composé de bore en oeuvre est suffisante, compte tenu des objectifs fixés.

Généralement, la quantité de composé de bore mise en oeuvre, exprimée en poids de bore élémentaire par rapport au poids de l'agent de polissage, est telle que ledit rapport varie de 0,05 à 5,0 %. La limite supérieure ne présente aucun caractère critique, mais il n'y a aucun intérêt à dépasser 5,0 %.

Afin d'obtenir les effets anti-caking et anti-compactage recherchés, il est souhaitable que la quantité du composé du bore soit comprise entre 0,05 et 1,0 %.

Poursuivant ses recherches, la demanderesse a trouvé que la quantité du composé de bore mise en oeuvre pouvait être diminuée lorsqu'on on adjoignait un troisième additif tel qu'un silicate d'aluminium.

Une forme de réalisation préférentielle de l'invention consiste donc en une composition de polissage à base de cérium caractérisée par le fait qu'elle comprend un agent de polissage à base d'oxyde cérique, un composé du bore et un silicate d'aluminium.

On fait appel, de préférence, aux silicates d'aluminium sous la forme des argiles.

Comme exemples d'argiles susceptibles d'être employées, on peut citer celles qui appartiennent aux groupes suivants :

- type kaolin ; kaolinite, dickite, nacrite, anauxite, halloysite, endelitte ;
- type serpentine ; chrysolite, amésite, cronstedite, chamosite, garnierite ;
- type montmorillonite : montmorillonite (bentonite), beidellite, nontronite, hectorite, saponite, sauconite ;
- type vermiculite ou chlorite ;
- l'attapulgite ou la sépiolite.

D'une manière préférentielle, on met en oeuvre les argiles du type montmorillonite, halloysite ou attapulgite. Elles présentent une structure en feuillets ou en lamelles empilées.

On choisit, encore plus préférentiellement, la montmorillonite.

On peut également, conformément à l'invention, faire appel à des argiles traitées à l'aide d'un composé organique.

Les argiles organophiles sont des produits connus et décrits dans la littérature.

On peut citer, à titre d'exemples, les produits commercialisés sous la marque BENTONE qui se présentent sous forme de plaquettes d'argiles du type montmorillonite dont les faces sont liées à un composé organique aliphatique ou aromatique, éventuellement porteurs de groupements fonctionnels polaires (alcool, acide, ester, cétone).

La quantité de silicate d'aluminium mise en oeuvre dans la composition de l'invention, exprimée en poids de silicate d'aluminium par rapport au poids de l'agent de polissage peut varier entre 0,5 et 10,0 %, et de préférence entre 1,0 et 3,0 %.

S'agissant du procédé de préparation de la composition, il consiste en un simple mélange de ses constituants qui se trouvent sous forme de poudre ; ceux-ci pouvant être mis en oeuvre dans un ordre quelconque. L'opération peut être faite dans un mélangeur à poudres de type connu : mélangeurs à chute libre du type tambour, mélangeurs verticaux ou horizontaux à vis hélicoïdale, mélangeurs horizontaux type Lödige, etc...

Selon une autre variante de l'invention, il est également possible de mettre en oeuvre les deux additifs, composé du bore et silicate d'aluminium, au moment de l'application, comme expliqué ci-après.

La mise en oeuvre de la composition perfectionnée de l'invention pour le polissage du verre se fait d'une manière classique. Comme elle intervient généralement dans un système de polissage à l'arrosé, elle est mise en suspension dans l'eau.

La confection du bain de polissage est réalisée, simplement, par addition de la composition poudre au milieu aqueux mis sous agitation manuellement ou par des moyens classiques d'agitation (agitation à ancre, à hélice ou à turbine etc...).

La quantité de composition introduite est telle que, généralement, la concentration de la composition exprimée en $CeO_2$ varie de 30 à 300 g par litre de bain.

La qualité de l'eau intervenant pour la préparation du bain de polissage ne présente aucun caractère critique mais il est préférable pour avoir une bonne tenue en suspension de la composition de l'invention, d'utiliser une eau douce c'est-à-dire une eau présentant une dureté inférieure à 30° TH.

La température du bain est choisie de telle sorte qu'elle soit inférieure à 50°C. Il est intéressant de travailler à des températures basses de l'ordre 20°C car toute élévation de température accélère la décantation de la suspension.

L'introduction des additifs intervenant dans la composition de polissage de l'invention peut être faite au moment de la confection du bain, c'est-à-dire l'agent de polissage, le composé du bore et le silicate d'aluminium sont additionnés par voie séparée sous forme de poudre ou de solution ou suspension aqueuse.

La composition de l'invention permet d'obtenir de bons résultats : absence de caking, nettoyage des verres très amélioré et des résultats satisfaisants en temps de sédimentation et compactage sans affecter l'efficacité polissante.

Elle convient parfaitement bien pour le polissage du verre ou des matières du même genre.

La présence des deux additifs dans la composition de polissage améliore les propriétés de caking et de compactage, mais ne modifie en aucun cas les performances techniques de l'agent de polissage, et par là-même, sa destination.

C'est ainsi que la composition de l'invention peut être utilisée en optique industrielle, dans le domaine de la lunetterie, série ou production et de la lunetterie de prescription, ainsi que dans l'industrie du verre qui regroupe la cristallerie, la glacerie, le verre plat, notamment vitrage et double-vitrage, les rétroviseurs d'automobile et les écrans de télévision.

Avant d'exemplifier les compositions de l'invention, on décrit les méthodes de détermination de leurs propriétés physico-chimiques, ainsi que les tests permettant d'apprécier leur aptitudes à être utilisées dans le domaine du polissage.

### a) densité apparente tassée

Elle est déterminée conformément à la norme DIN 53 194. Le principe de la méthode est d'introduire une quantité connue du produit en poudre dans une éprouvette graduée et de la soumettre à un tassement dans des conditions déterminées.

### b) surface spécifique

Elle est déterminée par adsorption d'azote conformément à la norme ASTM D 3663-7 établie à partir de la méthode BRUNAUER-EMMET-TELLER décrite dans le périodique "The Journal of American Society, 60, 309 (1938)".

### c) granulométrie

On prépare 40 cm³ d'une suspension de la composition à analyser à raison de 12 g par litre d'eau distillée contenant 1 g/l d'hexamétaphosphate de sodium.

On réalise ensuite le délitage des agglomérats aux ultra-sons générés par un appareil ultra-sons ANNEMASSE (puissance de 80 watts et fréquence 26 KHZ). L'opération dure 5 minutes.

On effectue ensuite l'analyse granulométrique à l'aide de l'instrument SEDIGRAPH 5000 D.

Cet appareil mesure le taux de sédimentation des particules en suspension et présente automatiquement ces résultats en une distribution en pourcentages cumulatifs en fonction des diamètres équivalents sphériques (Basée sur la loi de Stokes).

L'appareil détermine, par le truchement d'un faisceau de rayons X très fin, la concentration en particules retenues en suspension à différentes hauteurs de sédimentation, comme une fonction du temps. Le logarithme de l'intensité du rayon X est électroniquement généré et enregistré puis présente linéairement en "pourcentages cumulatifs" (en plus petits que) sur l'axe Y d'un enregistreur XY. Pour limiter le temps requis par l'analyse, la cellule de sédimentation est continuellement en mouvement de sorte que la profondeur de la cellule de sédimentation est inversement proportionnelle au temps. Le mouvement de la cellule est synchronisé avec l'axe des X de l'enregistreur,pour indiquer directement le diamètre équivalent sphérique correspondant au temps écoulé à une profondeur de sédimentation donnée, l'information de la dimension est présentée sur une feuille logarithmique à 3 modules.

On détermine ensuite le diamètre moyen $d_{50}$ qui est défini comme étant un diamètre tel que 50 % en poids des particules, ont un diamètre supérieur ou inférieur au diamètre moyen.

### d) tenue en suspension

Dans une éprouvette de 250 cm3, on introduit la suspension de la composition à tester à raison de 50 g/l soit 12,5 g de poudre dans 250 cm3 d'eau ayant une dureté de 28°TH et une température de 20°C. Après homogénéisation complète de la suspension, on suit la vitesse de décantation à l'aide d'un densimètre (graduation de 1000 à 1100) en fonction du temps. On peut tracer la courbe d = f(t).

Le $T_{50}$ est l'expression chiffrée du comportement du produit quant à sa faculté de tenir en suspension. C'est le temps, exprimé en minutes, décimales, au bout duquel la valeur mesurée est la moyenne entre la densité initiale et la densité finale de la liqueur claire.

### e) le compactage initial

Pour déterminer l'indice de compactage, on prépare à température ambiante dans un bécher en acier inox, 500 cm³ de suspension de la composition à tester, à raison de 100 g/l dans de l'eau permutée. La suspension est homogénéisée par agitation pendant 15 minutes. Après un repos de 24 heures entraînant la décantation, on procède par une agitation mécanique contrôlée à l'aide d'un agitateur plat (150 t/mn, 3 mn) à la remise en suspension du produit.

Le dépôt ne doit pas être heurté par la pale de l'agitateur.

Le surnageant est alors jeté.

La fraction non remise en suspension est alors séchée à l'étuve, pendant au moins 2 heures. Elle est ensuite pesée.

L'indice de compactage (C) est le pourcentage que représente cette fraction de produit sec, par rapport à la quantité de composition de polissage mise en oeuvre au départ.

On considère qu'un indice de compactage inférieur ou égal à 20 est acceptable et qu'il est encore plus satisfaisant lorsqu'il est inférieur à 5.

### f) indice de caking

Pour déterminer l'indice de caking, on recueille dans un bécher en acier inox, la suspension ayant servi à la mise en forme du polissoir (cf. test suivant). Après un repos de 24 heures entraînant la décantation, on procède par une agitation mécanique contrôlée (250 t/mn, 5 mn) à la remise en suspension du produit. Le surnageant est alors jeté, puis le bécher mis à l'étuve pour séchage de la fraction non remise en suspension.

L'indice de caking (IC) est le pourcentage que représente cette fraction, par rapport à la quantité de composition mise en oeuvre au départ.

On considère qu'un indice de caking inférieur ou égal à 20 est acceptable et qu'il est encore plus satisfaisant lorsqu'il est inférieur à 5.

### h) cleaning

Le test d'accrochage de la poudre de polissage au verre dit "test de cleaning" simule les difficultés rencontrées par l'utilisateur lors du nettoyage du verre après polissage et, dans certains cas, séchage entre la phase de polissage et la phase de nettoyage.

On prépare une suspension de la composition de polissage à tester ayant la consistance d'une boue fluide, mais plus pâteuse lorsqu'il y a présence d'une argile, en dispersant 8 g de ladite composition dans 4 cm³ d'eau permutée.

5 plaques de verre de qualité courante (vitre) sont très soigneusement lavées, à l'aide d'un détergent classique, rincées à l'eau permutée, puis à l'alcool et séchées.

On dépose à l'aide d'une spatule, une "couche mince" de la suspension sur les 3/4 de la surface de chaque plaque. Les plaques sont alors mises à l'étuve à 100°C pendant 15 minutes. A température ambiante, les plaques sont alors lavées sous un jet d'eau (débit 340 l/h) jusqu'à ce qu'aucune croute ne se détache.

Le problème d'accrochage se traduit par la présence d'un voile permanent à la surface du verre. Dans le cas contraire, la surface est claire.

### i) efficacité polissante sur mousse de polyuréthane (MPU)

On utilise une machine industrielle CMV modèle ICM 7 équipée de deux broches et d'une tête de polissage convexe. Une pompe alimente la surface de verre à polir à l'aide de la suspension de la composition de polissage à tester.

Les conditions opératoires sont les suivantes :

```
- vitesse de la tête................    1500 tours/mn

- vitesse des broches...............    1000 tours/mn

- pression..........................    1200 g/cm²

- concentration de la suspension.....   50 g/l

- dureté de l'eau...................    28° TH

- température.......................    20°C

- polissoir.........................    en mousse de polyuréthane

                                        MPU LP 46 (épaisseur 1,3 mm)

- verre à polir.....................    Crown blanc

                      diamètre.....     55 mm

- débit de la pompe.................    3,8 à 4 l/mn

- durée de l'essai..................    3 mn

- durée totale du test..............    60 mn
```

Les faces concaves des deux éprouvettes de verre sont travaillées ensemble pendant 3 minutes au bout desquelles l'enlèvement de matière est déterminée par pesée. On répète l'essai sur une durée de 1 heure.

Le poids moyen enlevé est ramené à

. unité de poids        : le mg
. unité de surface      : le dm²
. unité de temps        : la mn

On trace la courbe d'efficacité polissante en fonction du temps de travail.

A partir de cette courbe, on exprime l'efficacité polissante comme la moyenne des 10 premiers résultats.

Pour permettre de mieux illustrer la mise en oeuvre de l'invention, on donne ci-après différents exemples, bien entendu non limitatifs.

Les exemples 1 à 9 illustrent des compositions de polissage ne contenant qu'un composé du bore.

Dans les exemples 10 à 15 interviennent à la fois, un composé du bore et un silicate d'aluminium (argile ou argile organophile).

A titre comparatif, on donne dans les essais A, B, D, les résultats obtenus avec un agent de polissage sans additif et dans les essais C et E, l'agent de polissage n'est associé qu'à un silicate d'aluminium (argile ou argile organophile).

Exemples 1 à 8

Essai A

Dans cette série d'essais, on prépare des compositions de polissage améliorées ne contenant qu'un composé du bore.

Dans les exemples 1 à 4, le composé du bore est le tétraborate décahydraté de sodium ou borax.

Dans les exemples 5 à 8, le composé du bore est l'acide orthoborique appelé, par la suite, acide borique.

A titre d'agent de polissage, on fait appel à une composition d'oxyde cérique contenant 68,5 % d'oxyde cérique : ladite composition, appelée ci-après Cérox S, est préparée conformément à FR-A-2 549 846.

Le Cérox S présente les caractéristiques suivantes :

– composition chimique :

. oxyde cérique          : 62 %
. oxyde de lanthane      : 28 %
. oxyde de terres rares  : 90 %
. silice                 : 10 %

– densité apparente tassée : $d_A$ = 1,4
– surface spécifique : s.s. = 3,9 m²/g
– diamètre moyen des particules : $d_{50}$ = 1,3 μm
– % de particules de diamètre supérieur à 15 μm < 0,1 %

On prépare les compositions de l'invention des exemples 1 à 8, selon le protocole opératoire suivant :

On introduit 200 g de Cérox S dans un flacon en polyéthylène de 1 litre.

On additionne le composé du bore en une quantité telle que définie dans le Tableau I.

On effectue le mélange par agitation effectuée au moyen d'un mélangeur TURBULA.

L'opération de mélange dure 30 minutes.

On soumet la poudre obtenue aux différents tests définis ci-dessus.

Les résultats obtenus sont consignés dans le Tableau I.

On les compare avec ceux d'une composition de polissage de Cérox S, sans additif (essai A).

### Tableau I

| Réf. essai exemple | composé du bore | % composé du bore/Cérox S | $T_{50}$ mn | compactage % | caking IC % | cleaning |
|---|---|---|---|---|---|---|
| A | – | 0 | 5 | 70 | 40 | mauvais |
| 1 | borax | 0,5 | 4 | 82 | 32 | bon |
| 2 | borax | 1,0 | 3 | 75 | 35 | bon |
| 3 | borax | 2,0 | 3 | 23 | 39 | bon |
| 4 | borax | 5,0 | 2 | ⟨ 5 | ⟨ 5 | très bon |
| 5 | acide borique | 0,5 | 6 | 8 | 34 | |
| 6 | acide borique | 1,0 | 4,5 | 8 | 36 | |
| 7 | acide borique | 1,5 | 5 | 6 | 33 | |
| 8 | acide borique | 2,0 | 5,5 | 8 | ⟨ 5 | |

Il ressort de l'examen du Tableau I que l'amélioration du compactage est significative lorsque l'on met en oeuvre 5,0 % de borax (0,55 % de bore) ou 0,5 % d'acide borique (0,09 % de bore) et que l'amélioration du compactage et du caking est significative lorsqu'on met en oeuvre 5,0 % de borax (0,55 % de bore) ou 2,0 % d'acide borique (0,36 % de bore).

### Exemple 9

### Essai B

Dans la composition qui suit, l'additif est l'acide borique et l'agent de polissage est une composition d'oxyde cérique contenant 66 % d'oxyde cérique : ladite composition préparée conformément à FR-A-2 472 601 est disponible sur le marché sous la dénomination commerciale Cérox 1650.

Plus précisément, les caractéristiques du Cérox 1650 sont les suivantes :

– composition chimique

| . oxydes de terres rares | 94 % |
|---|---|
| . oxyde cérique | 66 % |
| . oxyde de lanthane | 19 % |
| . oxyde de néodyme | 9 % |
| . oxyde de praséodyme | < 0,0001 % |
| . fluorure exprimé en F | 4 % |
| . phosphate exprimé en $P_2O_5$ | 4 % |

- densité apparente tassée : $d_A$ = 1,6
- surface spécifique : s.s. = 3,2 $m^2/g$
- diamètre moyen des particules : $d_{50}$ = 1,0 µm
- % de particules de diamètre supérieur à 15 µm < 0,1 %

On prépare la composition de polissage améliorée contenant 2 % d'acide borique, conformément au mode opératoire donné dans les exemples 1 à 8.

Les résultats obtenus sont rassemblés dans le Tableau II.

On les compare avec ceux d'une composition de polissage de Cérox 1650, sans additif (essai B).

Tableau II

| Réf. essai exemple | Composé du bore | % composé du bore /Cérox 1650 | $T_{50}$ mn | Compactage % | Caking % | Efficacité polissante MPU mg/$dm^2$/mn |
|---|---|---|---|---|---|---|
| B | - | - | 2,5 | 10 | 40 | 380 |
| 9 | acide borique | 2 | 3,0 | 7 | < 5 | 370 |

On note une amélioration du caking et du compactage, sans perte d'efficacité polissante.

Exemple 10

Essai C

La composition de polissage de l'invention illustrée dans le présent exemple contient du Cérox S, tel que décrit dans les exemples 1 à 8, du borax et à titre de silicate d'aluminium, le Veegum T commercialisé par la Société VANDERBILT.

Le Veegum T est une argile du type Montmorillonite : c'est un silicate d'aluminium et de magnésium.

Sa composition chimique exprimée en poids d'oxydes est la suivante :

silice : 63,0 %
oxyde de magnésium : 10,5 %
oxyde d'aluminium : 10,5 %
oxyde ferrique : 0,9 %
oxyde de calcium : 2,3 %
oxyde de sodium : 2,4 %
oxyde de potassium : 1,2 %
perte au feu : 7,5 %

Elle se présente sous forme de paillettes blanches. Sa densité est de 2,6.

La préparation de la composition se fait par mélange des poudres selon le protocole opératoire décrit ci-après.

On introduit 200 g de Cérox S dans un flacon en polyéthylène de un litre.

On ajoute 4 g de Veegum T et l'ensemble est mis sous agitation pendant 15 mn, au moyen d'un mélangeur TURBULA.

On additionne ensuite 1 g de borax et l'on poursuit l'agitation encore 30 mn.

On obtient une poudre qui est soumise aux différents tests.

On donne les résultats obtenus dans le Tableau III

A titre comparatif, on reporte dans le Tableau III les résultats obtenus avec une composition de polissage de Cérox S, sans additif (essai A) et avec une composition de polissage qui ne contient comme additif que de l'argile, Veegum T (essai C).

Tableau III

| Réf. essai exemple | Composé du bore | % composé du bore/Cérox S | silicate d'aluminium | % silicate d'aluminium / Cérox S | T₅₀ mn | Compactage % | Caking % | Cleaning | Efficacité polissante MPU mg/dm²/mn |
|---|---|---|---|---|---|---|---|---|---|
| A | - | 0 | - | 0 | 5 | 70 | 40 | mauvais | 410 |
| C | - | 0 | Veegum T | 1 | 4 | 80 | < 5 | mauvais | 380 |
| 10 | borax | 0,5 | Veegum T | 2 | 5,5 | 20 | < 5 | très bon | 410 |

Il ressort de ce tableau III que l'utilisation d'un composé de bore et d'une argile permet d'obtenir de bons résultats en compactage et en caking, avec une quantité moindre de composé de bore (0,5 % au lieu de 5 %).

A titre de comparaison, on note que la mise en oeuvre d'une argile seule permet d'améliorer le caking, mais le compactage reste important. De plus, l'efficacité polissante est diminuée.

Exemples 11 à 13

Dans cette série d'essais, on prépare des compositions de polissage améliorées contenant un composé de bore et un silicate d'aluminium.

Dans les exemples 11 et 12, le composé du bore est l'acide borique mis en oeuvre respectivement à raison de 0,2 et 2 %.

Dans l'exemple 13, il s'agit de borax utilisé à raison de 0,5 %.

Dans tous les exemples 11 à 13, le silicate d'aluminium est le Veegum T mis en oeuvre à raison de 2 %.

L'agent de polissage est le Cérox 1650 tel que défini dans l'exemple 9.

La préparation des compositions se fait par mélange des poudres selon le protocole opératoire décrit ci-après.

On introduit 200 g de Cérox 1650 dans un flacon en polyéthylène de un litre.

On ajoute 4 g de Veegum T et l'ensemble est mis sous agitation pendant 15 mn, au moyen d'un mélangeur TURBULA.

On additionne ensuite le composé du bore en une quantité adéquate et l'on poursuit l'agitation encore 30 mn.

On obtient une poudre qui est soumise aux différents tests.

Les résultats obtenus sont consignés dans le Tableau IV.

On les compare avec ceux d'une composition de polissage de Cérox 1650 sans additif (essai B).

Tableau IV

| Réf. essai exemple | Composé du bore | % composé du bore /Cérox 1650 | silicate d'alumi- nium | % silicate d'aluminium /Cérox 1650 | T$_{50}$ mn | Compactage % | Caking % | Efficacité polissante MPU mg/dm$^2$/mn |
|---|---|---|---|---|---|---|---|---|
| B | - | - | - | - | 2,5 | 10 | 40 | 380 |
| 11 | acide borique | 0,2 | Veegum T | 2,0 | 3,0 | ⟨ 5 | ⟨ 5 | 380 |
| 12 | acide borique | 2,0 | Veegum T | 2,0 | 3,0 | ⟨ 5 | ⟨ 5 | 340 |
| 13 | borax | 0,5 | Veegum T | 2,0 | 3,2 | ⟨ 5 | ⟨ 5 | 380 |

Les compositions de polissage de l'invention décrites dans le Tableau IV présentent de bonnes qualités : une bonne tenue en suspension, une absence de compactage et de caking.

Exemple 14

Essai D

Dans la composition de l'exemple 14, on met en oeuvre du borax, de l'argile (Veegum T) et l'agent de polissage est une composition d'oxyde cérique contenant 92 % d'oxyde cérique : ladite composition, commercialisée sous la dénomination commerciale Cérox GG, est préparée conformément à FR-A-2 545 830.

Le Cérox GG présente les caractéristiques suivantes :
– composition chimique
. oxyde cérique          92 %
. sesquioxyde de lanthane     8 %

– densité apparente tassée      : $d_A$      = 1,6

– surface spécifique         : s.s.     = 6,0 m$^2$/g

– diamètre moyen des particules   : $d_{50}$     = 0,5 μm

– % de particules de diamètre supérieur à 15 μm ⟨ 0,1 %

On prépare la composition de polissage améliorée contenant 0,5 % de borax et 2,0 % de Veegum T selon le mode opératoire des exemples précédents en partant de 200 g de Cérox GG.

Les résultats obtenus sont rassemblés dans le Tableau V.

On les compare avec ceux d'une composition de polissage de Cérox GG, sans additif (essai D).

EP 0 320 338 B1

## Tableau V

| Réf. essai exemple | Composé du bore | % composé du bore/Cérox GG | silicate d'alumi-nium | % silicate d'aluminium /Cérox GG | T$_{50}$ mn | Compactage % | Caking % | Efficacité polissante MPU mg/dm$^2$/mn |
|---|---|---|---|---|---|---|---|---|
| D | - | - | - | - | 7,0 | 25 | 20 | 280 |
| 14 | borax | 0,5 | Veegum T | 2,0 | 3,5 | ⟨ 5 | ⟨ 5 | 300 |

On note que la composition de polissage de l'invention décrite dans le Tableau V présente une amélioration du compactage et du caking, tout en maintenant le niveau d'efficacité polissante.

## Exemple 15

### Essai E

La composition de polissage de l'invention illustrée dans le présent exemple contient du Cérox S tel que décrit dans les exemples 1 à 8, du borax et à titre de silicate d'aluminium, la BENTONE EW.

La BENTONE EW est une argile organophile. Elle se présente sous forme de plaquettes d'une argile (bentonite), dont les faces sont liées à un composé organique à longue chaîne.

La préparation de la composition se fait par mélange des poudres selon le protocole opératoire décrit dans l'exemple 10.

On donne les résultats obtenus dans le Tableau VI.

A titre comparatif, on reporte dans le Tableau VI les résultats obtenus avec une composition de polissage de Cérox S, sans additif (essai A) et avec une composition de polissage qui ne contient comme additif que l'argile organophile, BENTONE EW (essai E).

## Tableau VI

| Réf. essai exemple | Composé du bore | % composé du bore/Cérox S | silicate d'alumi-nium | % silicate d'aluminium / Cérox S | T$_{50}$ mn | Compactage % | Caking % | Cleaning | Efficacité polissante MPU mg/dm$^2$/mn |
|---|---|---|---|---|---|---|---|---|---|
| A | - | 0 | - | 0 | 5 | 70 | 40 | mauvais | 410 |
| E | - | - | Bentone EW | 1 | 4 | 40 | ⟨ 5 | mauvais | 380 |
| 15 | borax | 0,5 | Bentone EW | 2 | 7 | 25 | ⟨ 5 | bon | 410 |

Il ressort de l'examen du Tableau VI que l'addition de borax et de BENTONE EW à l'agent de polissage permet d'améliorer le compactage et le caking, tout en maintenant le niveau d'efficacité polissante.

16

**EP 0 320 338 B1**

## Revendications

1. Composition de polissage à base de cérium caractérisée par le fait qu'elle comprend en mélange physique d'une part un agent de polissage à base d'oxyde cérique et d'autre part, à titre d'additif, un composé du bore, la dite composition reformant aucune matière gelatineuse.

2. Composition selon la revendication 1 caractérisée par le fait que l'agent de polissage est l'oxyde cérique seul ou sous forme de composition.

3. Composition selon l'une des revendications 1 et 2 caractérisée par le fait qu'elle comprend au moins 30 % en poids d'oxyde cérique.

4. Composition selon l'une des revendications 1 à 3 caractérisée par le fait que l'oxyde cérique se trouve sous forme pulvérulente dont les dimensions de particules sont inférieures à environ 20 $\mu$m.

5. Composition selon la revendication 4 caractérisée par le fait que l'oxyde cérique a des dimensions de particules variant entre 0,1 $\mu$m et 10 $\mu$m.

6. Composition selon l'une des revendications 1 à 5 caractérisée par le fait que l'oxyde cérique présente une surface spécifique variant entre 1 et 35 m²/g.

7. Composition selon la revendication 6 caractérisée par le fait que l'oxyde cérique a une surface comprise entre 3 et 10 m²/g.

8. Composition selon la revendication 2 caractérisée par le fait que l'oxyde cérique est sous forme d'une composition obtenue selon un procédé qui consiste à mélanger simultanément, en continu, une solution de sel de cérium, une solution basique et une solution d'au moins un acide et/ou un sel dont le ou les anions sont susceptibles de former des composés insolubles de terres rares, le nombre d'équivalents basiques mis en oeuvre étant supérieur ou égal au nombre d'équivalents cérium et le pH du milieu réactionnel étant supérieur à 6 ; à filtrer le précipité obtenu ; à le sècher ; à le calciner.

9. Composition selon la revendication 8 caractérisée par le fait que l'on ajoute une solution aqueuse d'au moins une terre rare trivalente.

10. Composition selon l'une des revendications 8 et 9 caractérisée par le fait que l'anion est un fluorure, un sulfate, un borate ou un phosphate.

11. Composition selon la revendication 2 caractérisée par le fait que l'oxyde cérique est sous forme d'une composition comprenant une phase cristallographique du type $CeO_2$ et une phase cristallographique constituée par un pyrosilicate de terres rares répondant à la formule $Ln_{2-x} Ce_x Si_2O_7$ dans laquelle Ln représente au moins un élément pris dans le groupe constitué par les lanthanides et l'yttrium et dans laquelle x est supérieur ou égal à 0 et inférieur à 2.

12. Composition selon la revendication 11 caractérisée par le fait qu'elle comprend une composition contenant de de 75 à 95 % en poids de terres rares exprimées en oxydes avec un pourcentage d'oxyde cérique par rapport au poids total des oxydes de terres rares variant de 60 à 85 % et de 5 à 25 % en poids de silicium exprimé en $SiO_2$.

13. Composition selon la revendication 11 caractérisée par le fait que l'oxyde cérique est sous forme d'une composition obtenue selon un procédé qui consiste à mélanger simultanément, une solution de sel de cérium, une solution basique, une solution aqueuse de sel d'au moins une terre rare trivalente ou d'yttrium et une solution d'au moins un dérivé oxygéné du silicium susceptible de former des composés insolubles de terres rares ; à filtrer le précipité obtenu ; à le sécher et à le calciner à une température supérieure à 850°C.

14. Composition selon la revendication 2 caractérisée par le fait qu'elle comprend une composition contenant de l'oxyde cérique et au moins un oxyde non coloré d'une autre terre rare.

15. Composition selon la revendication 14 caractérisée par le fait qu'elle comprend une composition contenant de 40 à 99,5 % en poids d'oxyde cérique et de 0,5 à 60 % en poids d'oxydes de terres rares.

16. Composition selon la revendication 14 caractérisée par le fait que l'oxyde cérique est sous forme d'une composition obtenue selon un procédé qui consiste à mélanger simultanément, en continu, une solution de sel de cérium, une solution basique et une solution d'au moins un sel d'une terre rare trivalente choisie dans le groupe constitué par les lanthanides et l'yttrium et dont l'oxyde n'est pas coloré : le nombre d'équivalents basiques mis en oeuvre étant supérieur ou égal au nombre d'équivalents cérium et terres rares et le pH du milieu réactionnel étant supérieur à 6 ; à filtrer le précipité obtenu ; à le sécher ; à le calciner.

17. Composition selon l'une des revendications 1 à 16 caractérisée par le fait que le composé du bore est choisi dans le groupe formé par les acides boriques, les borates métalliques ou d'ammonium sous forme anhydre ou hydratée.

18. Composition selon la revendication 17 caractérisée par le fait que le composé du bore est l'acide orthoborique (ou son précurseur $B_2O_3$), métaborique, pyro- ou tétraborique, le métaborate de sodium, le métaborate tétrahydraté de sodium, le tétraborate de sodium, le tétraborate décahydraté de sodium ou borax, le tétraborate pentahydraté de sodium, le métaborate de potassium, le pentaborate tétrahydraté de potassium, le tétraborate

17

octahydraté de potassium, le pentaborate tétrahydraté d'ammonium, le tétraborate tétrahydraté d'ammonium.

19. Composition selon l'une des revendications 17 et 18 caractérisée par le fait que le composé du bore est l'acide orthoborique (ou son précurseur $B_2O_3$) ou le borax.

20. Composition selon l'une des revendications 1 à 19 caractérisée par le fait que le pourcentage pondéral de composé du bore exprimé en bore élémentaire par rapport à l'agent de polissage varie entre 0,05 et 5,0 %.

21. Composition selon la revendication 20 caractérisée par le fait que ledit pourcentage est compris entre 0,05 et 1,0 %.

22. Composition selon l'une des revendications 1 à 21 caractérisée par le fait qu'elle comprend en outre un silicate d'aluminium.

23. Composition selon la revendication 22 caractérisée par le fait que le silicate d'aluminium est une argile ou une argile organophile.

24. Composition selon l'une des revendications 22 et 23 caractérisée par le fait que l'argile est une argile du type kaolin, serpentine, montmorillonite, vermiculite ou chlorite, l'attapulgite ou la sépiolite.

25. Composition selon l'une des revendications 22 à 24 caractérisée par le fait que l'argile est du type montmorillonite, halloysite ou attapulgite.

26. Composition selon l'une des revendications 22 à 25 caractérisée par le fait que l'argile est la montmorillonite.

27. Composition selon l'une des revendications 22 à 26 caractérisée par le fait que pour le pourcentage pondéral de silicate d'aluminium exprimé par rapport à l'agent de polissage varie entre 0,5 et 10,0 %.

28. Composition selon la revendication 27 caractérisée par le fait que ledit pourcentage est compris entre 1,0 et 3,0 %.

29. Procédé de préparation de la composition de polissage décrite dans l'une des revendications 1 à 21 caractérisé par le fait que l'on fait un mélange poudre à poudre de l'agent de polissage et du composé de bore.

30. Procédé selon la revendication 29 caractérisé par le fait que l'on additionne le silicate d'aluminium.

31. Procédé de préparation de la composition de polissage décrite dans l'une des revendications 1 à 28 caractérisé par le fait que l'on ajoute au bain de polissage contenant l'agent de polissage en suspension, le composé du bore et, éventuellement, le silicate d'aluminium.

32. Utilisation de la composition décrite dans l'une des revendications 1 à 28 pour le polissage du verre.

33. Utilisation de la composition selon la revendication 32 comme agent de polissage en optique industrielle, dans le domaine de la lunetterie et dans l'industrie du verre.

34. Utilisation selon l'une des revendications 32 et 33 caractérisée par le fait que la concentration de la composition de polissage exprimée en $CeO_2$ varie de 30 à 300 g par litre de bain.

## Patentansprüche

1. Poliermittel auf Cerbasis, dadurch gekennzeichnet, daß es im physikalischen Gemisch miteinander einen Polierwirkstoff auf der Basis von Ceroxid und als Zusatz eine Borverbindung enthält, wobei das Mittel keinerlei gelatineartiges Material bildet.

2. Mittel nach Anspruch 1, dadurch gekennzeichnet, daß der Polierwirkstoff Ceroxid alleine oder in Form eines Versatzes ist.

3. Mittel nach einem der Ansprüche 1 und 2, dadurch gekennzeichnet, daß es mindestens 30 Gew.-% Ceroxid enthält.

4. Mittel nach einem der Ansprüche 1 bis 3, dadurch gekennzeichnet, daß das Ceroxid als Pulver vorliegt mit einer Teilchengröße unter etwa 20 μm.

5. Mittel nach Anspruch 4, dadurch gekennzeichnet, daß das Ceroxid Teilchengrößen im Bereich von 0,1 μm bis 10 μm aufweist.

6. Mittel nach einem der Ansprüche 1 bis 5, dadurch gekennzeichnet, daß das Ceroxid eine spezifische Oberfläche im Bereich von 1 bis 35 m²/g aufweist.

7. Mittel nach Anspruch 6, dadurch gekennzeichnet, daß das Ceroxid eine spezifische Oberfläche im Bereich von 3 bis 10 m²/g aufweist.

8. Mittel nach Anspruch 2, dadurch gekennzeichnet, daß das Ceroxid als Versatz vorliegt, der gemäß einem Verfahren erhalten worden ist, bei dem gleichzeitig kontinuierlich eine Cersalzlösung, eine basische Lösung und eine Lösung mindestens einer Säure und/oder eines Salzes, dessen Anion oder Anionen unlösliche SE-Verbindungen bilden können, vermischt werden, wobei die Anzahl eingesetzter basischer Äquivalente größer oder gleich ist der Anzahl Ceräquivalente, und der pH-Wert des Reaktionsmediums über 6 liegt; der erhaltene Niederschlag filtriert, getrocknet und gebrannt wird.

9. Mittel nach Anspruch 8, dadurch gekennzeichnet, daß man eine wäßrige Lösung mindestens einer dreiwertigen Seltenen Erde zusetzt.

10. Mittel nach einem der Ansprüche 8 und 9, dadurch gekennzeichnet, daß das Anion ein Fluorid, ein Sulfat, ein Borat oder ein Phosphat ist.

11. Mittel nach Anspruch 2, dadurch gekennzeichnet, daß das Ceroxid in Form eines Versatzes vorliegt, der eine kristallographische Phase vom Typ $CeO_2$ enthält sowie eine kristallographische Phase bestehend aus einem SE-Pyrosilicat der Formel $Ln_{2-x} Ce_x Si_2O_7$, in der Ln mindestens ein Element aus der Gruppe bestehend aus den Lanthaniden und aus Yttrium darstellt und x größer oder gleich 0 und kleiner 2 ist.

12. Mittel nach Anspruch 11, dadurch gekennzeichnet, daß es einen Versatz umfaßt, der 75 bis 95 Gew.-% Seltene Erden, ausgedrückt als Oxide, mit einem Prozentsatz an Ceroxid, bezogen auf das Gesamtgewicht der SE-Oxide im Bereich von 60 bis 85%, sowie 5 bis 25 Gew.-% Silicium, ausgedrückt als $SiO_2$, enthält.

13. Mittel nach Anspruch 11, dadurch gekennzeichnet, daß das Ceroxid in Form eines Versatzes vorliegt, der gemäß einem Verfahren erhalten worden ist, bei dem gleichzeitig eine Cersalzlösung, eine basische Lösung, eine wäßrige Salzlösung mindestens einer dreiwertigen Seltenen Erde oder von Yttrium und eine Lösung mindestens eines Sauerstoff-haltigen Derivats von Silicium, das unlösliche SE-Verbindungen bilden kann, vermischt werden, der erhaltene Niederschlag filtriert, getrocknet und bei einer Temperatur oberhalb 850°C gebrannt wird.

14. Mittel nach Anspruch 2, dadurch gekennzeichnet, daß es einen Versatz umfaßt, der Ceroxid und mindestens ein nicht gefärbtes Oxid einer anderen Seltenen Erde enthält.

15. Mittel nach Anspruch 14, dadurch gekennzeichnet, daß es einen Versatz umfaßt, der 40 bis 99,5 Gew.-% Ceroxid und 0,5 bis 60 Gew.-% SE-Oxide enthält.

16. Mittel nach Anspruch 14, dadurch gekennzeichnet, daß das Ceroxid als Versatz vorliegt, der gemäß einem Verfahren erhalten worden ist, bei dem gleichzeitig kontinuierlich eine Cersalzlösung, eine basische Lösung und eine Lösung mindestens eines Salzes einer dreiwertigen Seltenen Erde, ausgewählt aus der Gruppe bestehend aus den Lanthaniden und Yttrium, und dessen Oxid nicht gefärbt ist, vermischt werden, wobei die Anzahl eingesetzter basischer Äquivalente größer oder gleich ist der Anzahl Ceräquivalente und SE-Äquivalente und der pH-Wert des Reaktionsmediums über 6 liegt, und der erhaltene Niederschlag filtriert, getrocknet und gebrannt wird.

17. Mittel nach einem der Ansprüche 1 bis 16, dadurch gekennzeichnet, daß die Borverbindung aus der Gruppe, gebildet von den Borsäuren, den Metallboraten oder Ammoniumboraten in wasserfreier oder hydratisierter Form, ausgewählt ist.

18. Mittel nach Anspruch 17, dadurch gekennzeichnet, daß die Borverbindung Orthoborsäure (oder ihr Vorläufer $B_2O_3$), Metaborsäure, Pyro- oder Tetraborsäure, Natriummetaborat, Natriummetaborat-tetrahydrat, Natriumtetraborat, Natriumtetraborat-decahydrat oder Borax, Natriumtetraborat-pentahydrat, Kaliummetaborat, Kaliumpentaborat-tetrahydrat, Kaliumtetraborat-octahydrat, Ammoniumpentaborat-tetrahydrat oder Ammoniumtetraborattetrahydrat ist.

19. Mittel nach einem der Ansprüche 17 und 18, dadurch gekennzeichnet, daß die Borverbindung Orthoborsäure (oder ihr Vorläufer $B_2O_3$) oder Borax ist.

20. Mittel nach einem der Ansprüche 1 bis 19, dadurch gekennzeichnet, daß der gewichtsprozentuale Anteil der Borverbindung, ausgedrückt als elementares Bor bezogen auf den Polierwirkstoff, im Bereich von 0,05 bis 5,0% liegt.

21. Mittel nach Anspruch 20, dadurch gekennzeichnet, daß der Prozentanteil im Bereich von 0,05 bis 1,0% liegt.

22. Mittel nach einem der Ansprüche 1 bis 21, dadurch gekennzeichnet, daß es zusätzlich ein Aluminiumsilicat enthält.

23. Mittel nach Anspruch 22, dadurch gekennzeichnet, daß das Aluminiumsilicat ein Ton oder ein organophiler Ton ist.

24. Mittel nach einem der Ansprüche 22 und 23, dadurch gekennzeichnet, daß der Ton ein Ton vom Typ Kaolin, Serpentin, Montmorillonit, Vermiculit oder Chlorit, Attapulgit oder Sepiolit ist.

25. Mittel nach einem der Ansprüche 22 bis 24, dadurch gekennzeichnet, daß der Ton vom Typ Montmorillonit, Halloysit oder Attapulgit ist.

26. Mittel nach einem der Ansprüche 22 bis 25, dadurch gekennzeichnet, daß der Ton Montmorillonit ist.

27. Mittel nach einem der Ansprüche 22 bis 26, dadurch gekennzeichnet, daß der gewichtsprozentuale Anteil an Aluminiumsilicat, ausgedrückt bezogen auf den Polierwirkstoff, im Bereich von 0,5 bis 10,0% liegt.

28. Mittel nach Anspruch 27, dadurch gekennzeichnet, daß der prozentuale Anteil im Bereich von 1,0 bis 3,0% liegt.

29. Verfahren zur Herstellung des Poliermittels nach einem der Ansprüche 1 bis 21, dadurch gekennzeichnet, daß man ein Pulver-zu-Pulvergemisch des Polierwirkstoffs und der Borverbindung herstellt.

30. Verfahren nach Anspruch 29, dadurch gekennzeichnet, daß man Aluminiumsilicat zusetzt.

31. Verfahren zur Herstellung des Poliermittels nach einem der Ansprüche 1 bis 28, dadurch gekennzeichnet, daß man dem Polierbad, das den Polierwirkstoff suspendiert enthält, die Borverbindung und gegebenenfalls das Aluminiumsilicat zusetzt.

32. Verwendung des Mittels nach einem der Ansprüche 1 bis 28 zum Polieren von Glas.

33. Verwendung des Mittels nach Anspruch 32 als Poliermittel in der optischen Industrie im Bereich der Brillenherstellung und in der Glasindustrie.

34. Verwendung nach einem der Ansprüche 32 und 33, dadurch gekennzeichnet, daß die Konzentration des Poliermittels, ausgedrückt als $CeO_2$, im Bereich von 30 bis 300 g je Liter Bad liegt.

## Claims

1. Cerium-based polishing composition, characterised in that it comprises, in the form of a physical mixture, on the one hand a polishing agent based on ceric oxide and, on the other hand, as additive, a boron compound, the said composition not forming a gelatinous material.

2. Composition according to Claim 1, characterised in that the polishing agent is ceric oxide on its own or in the form of a composition.

3. Composition according to either of Claims 1 and 2, characterised in that it comprises at least 30% by weight of ceric oxide.

4. Composition according to one of Claims 1 to 3, characterised in that the ceric oxide is in pulverulent form, the particle sizes being less than about 20 $\mu$m.

5. Composition according to Claim 4, characterised in that the ceric oxide has particle sizes varying between 0.1 $\mu$m and 10 $\mu$m.

6. Composition according to one of Claims 1 to 5, characterised in that the ceric oxide has a specific surface area varying between 1 and 35 m$^2$/g.

7. Composition according to Claim 6, characterised in that the ceric oxide has a specific surface area of between 3 and 10 m$^2$/g.

8. Composition according to Claim 2, characterised in that the ceric oxide is in the form of a composition obtained by a process which consists in simultaneously continuously mixing a cerium salt solution, an alkaline solution and a solution of at least one acid and/or one salt, the anion or anions of which are capable of forming insoluble rare earth compounds, the number of basic equivalents used being greater than or equal to the number of cerium equivalents and the pH of the reaction mixture being higher than 6; filtering off the precipitate obtained; drying it and calcining it.

9. Composition according to Claim 8, characterised in that an aqueous solution of at least one trivalent rare earth is added.

10. Composition according to either of Claims 8 and 9, characterised in that the anion is a fluoride, a sulphate, a borate or a phosphate.

11. Composition according to Claim 2, characterised in that the ceric oxide is in the form of a composition comprising a crystallographic phase of the $CeO_2$ type and a crystallographic phase consisting of a rare earth pyrosilicate corresponding to the formula $Ln_{2-x} Ce_x Si_2O_7$ in which Ln represents at least one element taken from the group consisting of the lanthanides and yttrium and in which x is greater than or equal to 0 and less than 2.

12. Composition according to Claim 11, characterised in that it comprises a composition containing from 75 to 95% by weight of rare earths expressed as oxides, with a percentage of ceric oxide with respect to the total weight of rare earth oxides varying from 60 to 85%, and from 5 to 25% by weight of silicon expressed as $SiO_2$.

13. Composition according to Claim 11, characterised in that the ceric oxide is in the form of a composition obtained by a process which consists in simultaneously mixing a cerium salt solution, an alkaline solution, an aqueous solution of a salt of at least one trivalent rare earth or yttrium and a solution of at least one oxygen-containing derivative of silicon capable of forming insoluble rare earth compounds; filtering off the precipitate obtained; drying it and calcining it at a temperature higher than 850°C.

14. Composition according to Claim 2, characterised in that it comprises a composition containing ceric oxide and at least one colourless oxide of another rare earth.

15. Composition according to Claim 14, characterised in that it comprises a composition containing from 40 to 99.5% by weight of ceric oxide and from 0.5 to 60% by weight of rare earth oxides.

16. Composition according to Claim 14, characterised in that the ceric oxide is in the form of a composition obtained by a process which consists in simultaneously continuously mixing a cerium salt solution, an alkaline solution and a solution of at least one salt of a trivalent rare earth chosen from the group comprising the lanthanides and yttrium and having an oxide which is not coloured: the number of basic equivalents used being greater than or equal to the number of cerium and rare earth equivalents and the pH of the reaction mixture being higher than 6; filtering off the precipitate obtained; drying it and calcining it.

17. Composition according to one of Claims 1 to 16, characterised in that the boron compound is chosen from the group comprising boric acids and metal or ammonium borates in anhydrous or hydrated form.

18. Composition according to Claim 17, characterised in that the boron compound is ortho-boric acid (or its precursor $B_2O_3$), metaboric, pyroboric or tetraboric acid, sodium metaborate, sodium metaborate tetrahydrate, sodium tetraborate, sodium tetraborate decahydrate or borax, sodium tetraborate pentahydrate, potassium metaborate, potassium pentaborate tetrahydrate, potassium tetraborate octahydrate, ammonium pentaborate tetrahydrate or ammonium tetraborate tetrahydrate.

19. Composition according to either of Claims 17 and 18, characterised in that the boron compound is ortho-boric acid (or its precursor $B_2O_3$) or borax.

20. Composition according to one of Claims 1 to 19, characterised in that the percentage by weight of boron compound, expressed as elementary boron, with respect to the polishing agent varies between 0.05 and 5.0%.

21. Composition according to Claim 20, characterised in that the said percentage is between 0.05 and 1.0%.

22. Composition according to one of Claims 1 to 21, characterised in that it also comprises an aluminium silicate.

23. Composition according to Claim 22, characterised in that the aluminium silicate is a clay or an organo-philic clay.

24. Composition according to either of Claims 22 and 23, characterised in that the clay is a clay of the kaolin, serpentine, montmorillonite, vermiculite or chlorite type, attapulgite or sepiolite.

25. Composition according to one of Claims 22 to 24, characterised in that the clay is of the montmorillonite, halloysite or attapulgite type.

26. Composition according to one of Claims 22 to 25, characterised in that the clay is montmorillonite.

27. Composition according to one of Claims 22 to 26, characterised in that the percentage by weight of aluminium silicate, expressed with respect to the polishing agent, varies between 0.5 and 10.0%.

28. Composition according to Claim 27, characterised in that the said percentage is between 1.0 and 3.0%.

29. Process for the preparation of the polishing composition described in one of Claims 1 to 21, characterised in that a powder to powder mixture is prepared containing polishing agent and boron compound.

30. Process according to Claim 29, characterised in that aluminium silicate is added.

31. Process for the preparation of the polishing composition described in one of Claims 1 to 28, characterised in that the boron compound and, where appropriate, the aluminium silicate are added to the polishing bath containing the polishing agent in suspension.

32. Use of the composition described in one of Claims 1 to 28 for polishing glass.

33. Use of the composition according to Claim 32 as a polishing agent for industrial optics, in the spectacle sector and in the glass industry.

34. Use according to either of Claims 32 and 33, characterised in that the concentration of the polishing composition, expressed as $CeO_2$, varies from 30 to 300 g per litre of bath.